Europäisches Patentamt

(19) European Patent Office

Office européen des brevets

(11) Publication number: **0 076 792**
**B1**

(12) **EUROPEAN PATENT SPECIFICATION**

(45) Date of publication of patent specification: **07.08.85**

(21) Application number: **81900933.3**

(22) Date of filing: **15.04.81**

(86) International application number:
**PCT/SE81/00116**

(87) International publication number:
**WO 82/03529 28.10.82 Gazette 82/26**

(51) Int. Cl.⁴: **A 01 D 46/00** // A01F11/00,
A01G23/00

(54) **A METHOD AND APPARATUS FOR HARVESTING CONES FROM TREES, PARTICULARLY FROM PINE AND SPRUCE TREES.**

(43) Date of publication of application:
**20.04.83 Bulletin 83/16**

(45) Publication of the grant of the patent:
**07.08.85 Bulletin 85/32**

(84) Designated Contracting States:
**AT DE FR GB**

(56) References cited:
**FR-A-2 329 182**

(73) Proprietor: **LÖNNELID, Elis**
**Uttervägen 8**
**S-981 00 Kiruna (SE)**

(72) Inventor: **LÖNNELID, Elis**
**Uttervägen 8**
**S-981 00 Kiruna (SE)**

(74) Representative: **Uusitalo, Isak**
**Carminger & Uusitalo Patentbyra AB Box 3554**
**S-103 69 Stockholm (SE)**

Courier Press, Leamington Spa, England.

## Description

The present invention relates to a method and an apparatus for harvesting cones from trees such as pine and spruce trees.

Normally cones are harvested manually in the clear-felled area, in which the crowns of the trees are left after a tree-felling operation. Attempts have also been made to pick cones manually from standing trees, in which a workman is lifted to the height of the crown of the tree by means of a crane. This method is extremely risky, however. In other known methods there are used devices which shake the trees so as to cause the cones to fall to the ground, from where they are collected manually. The trees are shaken either from a helicopter or from the ground.

A fruit gathering apparatus, for gathering grapes from vines, is described in FR—A—2 329 182. In this known apparatus, a vibratory arrangement is placed around the plant to be harvested, and reciprocatingly movable means located adjacent the vine branches activated, to cause the grape bunches to fall onto collecting surfaces, and down into a container. Although this specification does not relate to cone-harvesting methods, it illustrates the state of the related art and highlights the problems associated therewith.

One disadvantage with these known methods is that they are time consuming and expensive, which causes the seed obtained from the cones to be excessively dear. Because of the high price of the seed, the general tendency is to be economical when sowing said seed, which results in a poor regrowth cycle.

The object of the invention is to provide a method and an apparatus with which cones can be harvested in a less expensive and simpler manner and by which cones can be gathered in a more rational manner than with known methods.

Thus, according to a first aspect of the invention there is provided a method of harvesting cones from trees such as pine and spruce, in which the tree is first felled and then placed in a device which encircles, or substantially encircles a part of the tree, whereafter the crown of the tree is drawn through the device, to cause the branches on the tree to engage cone—loosening means within the device, to cause the cones to be loosened from said crown, whereafter said cones are collected in said device.

According to a further aspect of the invention there is provided a device for loosening cones from the branches of trees in which the device includes a drum having an openable and closeable outer surface or substantially closable outer surface and being open at both ends thereof, and is provided with means for opening and closing said surface, which is intended to receive and encircle at least part of the crown of the tree, and in which the drum is provided on the inner surface thereof with rows of rod-shaped elements arranged to contact the branches of said tree in a manner to loosen the cones therefrom when the tree is pulled through the device.

In accordance with a preferred embodiment of the invention, the drum comprises a fixed part and two pivotable walls on a respective side of said fixed part, said walls being pivotable towards and away from each other about a respective axis for closing and opening the outer surface of the drum. Thus, the cones are picked purely mechanically, in conjunction with a tree-felling operation.

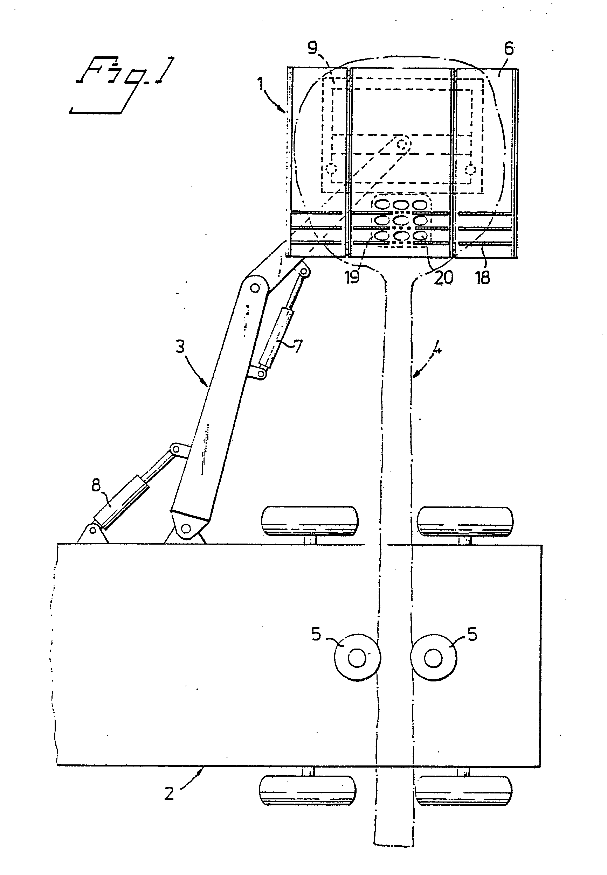

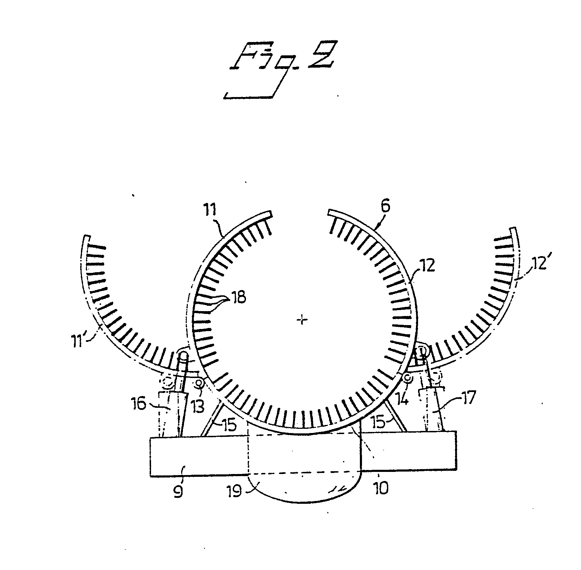

The apparatus according to the invention will now be described in detail with reference to the accompanying drawings, in which Figure 1 is a plan view of an embodiment of the apparatus incorporated in a tree-felling apparatus, and Figure 2 is an end view of the drum-shaped picking head of the apparatus.

In Figure 1 there is shown a cone-picking arrangement 1, hereinafter called the cone picker, which is coupled to a tree-felling apparatus 2 by means of a pivoted arm 3, a felled tree 4 being placed in the cone picker and gripped by two feed rollers 5 arranged therein. The picking head or drum 6 of the cone picker is manouvered into the desired position by means of two hydraulic-piston-cylinder devices 7 and 8.

Figure 2 illustrates the cone picker in an end view. The tree is placed in the drum 6, which is mounted on a frame structure 9 and comprises three walls 10, 11 and 12. The walls 11 and 12 are pivotally mounted on pins 13 and 14 respectively, said walls being illustrated in their outwardly swung positions in chain lines 11', 12'. As will be seen from the Figures, the walls form a circular-cylindrical drum when occupying their closed position. The third wall 10 is stationarily arranged and is welded to the frame structure 9 via stays 15. Pivoting of the walls 11 and 12 between their outwardly swung or open position and their closed position is controlled by means of two hydraulic piston-cylinder devices 16 and 17 respectively. The walls 10, 11 and 12 are provided on their inner surfaces with rows of rods 18 of equal length and at equal spacing therebetween. The rods 18 may be made of steel or a plastics material and are preferably covered with a rubber material. In Figure 2 only one row of rods 18 is shown around the periphery of the drum, although it will be understood that any number of rows can be arranged, three such rows being indicated in Figure 1. The rods in separate rows may also be displaceably arranged in the peripheral direction relative to the rods of an adjacent row. On the undersurface of the stationary wall 10 there is arranged a receptacle 19 into which the cones fall from the drum through openings 20 (Figure 1).

The mode of operation of the apparatus according to the invention is as follows:

Subsequent to felling a tree 4 by means of the tree-feller 2 the tree is placed in the drum 6, the walls 11 and 12 of which are open in the manner shown in chain lines 11' and 12' of Figure 2. The tree is placed in a manner such that the drum encircles the crown of the tree, as illustrated in Figure 1. The walls 11 and 12 are then closed by means of the hydraulic piston-cylinders 16 and 17. It is not necessary for the walls to be completely closed. The extent to which the walls are closed is determined by the size of the crown of the tree. The crown of the tree is then drawn through the drum 6, downwardly as seen in Figure 1, by means of the feed rollers 5. The rods 18 when coming into contact with the branches of the tree move along the surfaces of the branches and loosen the cones growing thereon. The cones fall down into the receptacle 19 on the stationary wall 10 through the openings 20.

Although the illustrated and described drum 6 is of circular-cylindrical shape, it may also have a certain conicity. Further, the walls need not be made in a single piece as with the illustrated embodiment, but may comprise, for example, a bed of rods 18 joined together in a manner such as to form a wall unit. Further, the drum 6 need not have a circular cross section, but may be given any suitable shape.

## Claims

1. A method of harvesting cones from trees such as pine and spruce, characterized in that the tree is first felled and then placed in a device which encircles or substantially encircles a part of the tree, whereafter the crown of the tree is drawn through said device to cause the branches of the tree to engage cone loosening means within said device to cause the cones to be loosened from said crown, whereafter said cones are collected in said device loosened from the crown.

2. A device for loosening cones from the branches of trees in accordance with the method of claim 1, characterized in that the device includes a drum (6) having an openable and closeable outer surface or substantially closable outer surface and being open at both ends thereof, and is provided with means (16, 17) for opening and closing said surface, which is intended to receive and encircle at least part of the crown of the tree (4); and in that the drum (6) is provided on the inner surface thereof with rows of rod-shaped elements (18) arranged to contact the branches of said tree in a manner to loosen the cones therefrom when the tree is pulled through the device.

3. A device according to claim 2, characterized in that the drum (16) comprises a fixed part (10) and two pivotable walls (11, 12) on a respective side of said fixed part, said walls being pivotable towards and away from each other about a respective axis (13, 14) for closing and opening the outer surface of the drum.

4. A device according to claim 2 or claim 3, characterized in that the rod-like elements (18) are made of steel and covered with a rubber material.

## Revendications

1. Procédé de récolte de strobiles ou cônes d'arbres tels que des pins et des sapins, caractérisé en ce qu'on abat d'abord l'arbre, puis on le place dans un dispositif qui encercle ou entoure sensiblement une partie de l'arbre, après quoi on tire la ramure de l'arbre à travers le dispositif afin que les branches de l'arbre viennent en contact avec des moyens de détachement de cônes prévus dans le dispositif, de façon à détacher les cônes de la ramure, ces cônes détachés de la ramure étant ensuite collectés dans le dispositif.

2. Dispositif pour détacher les cônes des branches d'arbres, conformément au procédé suivant la revendication 1, caractérisé en ce que le dispositif comprend un tambour (6), comportant une surface extérieure qui peut être ouverte et fermée ou sensiblement fermée et étant ouvert à ses deux extrémités, et des moyens (16, 17) d'ouverture et de fermeture de cette surface, qui est prévue pour recevoir et encercler au moins une partie de la ramure de l'arbre (4); et en ce que le tambour (6) comporte sur sa surface intérieure des rangées d'éléments (18) en forme de tige agencés de manière à venir en contact avec les branches de l'arbre afin d'en détacher les cônes, lorsque l'arbre est tiré à travers le dispositif.

3. Dispositif suivant la revendication 2, caractérisé en ce que le tambour (16) comprend une partie fixe (10) et deux parois pivotantes (11, 12) situées d'un côté respectif de la partie fixe, ces parois pouvant pivoter de manière à se rapprocher et s'éloigner l'une de l'autre, autour d'un axe respectif (13, 14), pour fermer et ouvrir la surface extérieure du tambour.

4. Dispositif suivant la revendication 2 ou 3, caractérisé en ce que les éléments (18) en forme de tige sont en acier et sont revêtes de caoutchouc.

## Patentansprüche

1. Verfahren zum Ernten von Zapfen von Bäumen, wie zum Beispiel Kiefern und Fichten, dadurch gekennzeichnet, daß der Baum zuerst gefällt und dann in eine Vorrichtung gegeben wird, die einen Teil des Baumes umfaßt oder im wesentlichn umfaßt, worauf die Krone des Baumes durch die genannte Vorrichtung gezogen wird, damit die Zweige des Baumes in Mittel zum Ablösen der Zapfen innerhalb der genannten Vorrichtung eingreifen, um die Zapfen von der genannten Krone zu lösen, worauf die von der Krone gelösten Zapfen in der genannten Vorrichtung gesammelt werden.

2. Vorrichtung zum Ablösen von Zapfen von Baumzweigen gemäß dem Verfahren nach Anspruch 1, dadurch gekennzeichnet, daß die Vorrichtung eine Trommel (6) aufweist, deren Außenfläche geöffnet und geschlossen oder im wesentlichen geschlossen werden kann, und deren beide Enden offen sind, daß sie mit Mittel (16, 17) zum Öffnen und Schließen der genannten Fläche versehen ist, die zumindest einen Teil der Krone des Baumes (4) aufnehmen und umfassen soll; und daß die Trommel (6) an ihrer Innenfläche mit Reihen von stabförmigen Elementen (18) versehen ist, die so angeordnet sind, daß sie mit den Zweigen des genannten Baumes so in Berührung kommen, daß die Zapfen davon gelöst werden, wenn der Baum durch die Vorrichtung gezogen wird.

3. Vorrichtung nach Anspruch 2, dadurch gekennzeichnet, daß die Trommel (6) einen unbeweglichen Teil (10) und zwei schwenkbare Wände (11, 12) jeweils an einer Seite des genannten unbeweglichen Teiles aufweist, wobei die genannten Wände jeweils um eine Achse (13, 14) zueinander und voneinander weg geschwenkt werden können, um die Außenfläche der Trommel zu schließen und zu öffnen.

4. Vorrichtung nach Anspruch 2 oder 3, dadurch gekennzeichnet, daß die stabähnlichen Elemente (18) aus Stahl bestehen und mit einem Gummimaterial überzogen sind.

Fig.1

Fig. 2